# EUROPEAN PATENT APPLICATION

(11) **EP 4 501 419 A1**
(43) Date of publication of application: **05.02.2025**
(21) Application number: 24191637.8
(22) Date of filing: 30.07.2024
(51) Int. Cl.: A63B 53/14, A63B 60/08, A63B 60/14, A63B 102/32, B29C 63/00, B32B 7/12, C09J 5/00

(54) **SOLVATED ADHESIVE COMPOSITION AND METHOD**

(30) Priority: 01.08.2023 US 202363517017 P
(71) Applicant: Eaton Intelligent Power Limited, Dublin 4, D04 Y0C2 (IE)
(72) Inventor: Balnis, Craig R., Dublin, D04 Y0C2 (IE)
(74) Representative: Schwan Schorer & Partner mbB

(57) **Abstract**

Disclosed herein is a solvated adhesive/tackifier composition, methods of making, methods of using, and kits including the composition. The composition acts as a stabilizing medium, for example, for installation and securing of a golf club grip. A lubricating solvent provides lubrication for sliding the golf grip including the adhesive composition onto the golf club shaft, and the solvent may solvate the adhesive composition. The grip/shaft are left for the composition to dry for a period of time, and the same composition then acts as an adhesive/tackifier to secure the grip to the shaft and to prevent sliding or rotation of the grip on the shaft.

## Description

### BACKGROUND OF THE INVENTION

Currently, golf club grips are installed using a method that includes a solvent (for example, an aliphatic solvent) and solid double-sided tape. The tape is first applied to (wrapped around) the golf shaft in the location where the grip will be installed. The solvent then applied to the tape surface to lubricate the surface to enable sliding of the grip onto the shaft (with reduced friction) over the top of the sticky tape. If a user wishes to remove the grip and install a second grip, the grip is removed from the tape and shaft (usually by cutting the grip). When the grip is removed, tape remains on the golf shaft. The tape must be removed before application of additional tape and the second grip. Removal of this tape is tedious and involves steps that are time-intensive and can potentially damage the shaft material if done improperly, such as heating, cutting, and/or scraping.

### SUMMARY OF THE INVENTION

Disclosed herein is the use of a solvated adhesive/tackifier composition as a stabilizing medium, for example, for installation and securing of a golf club grip. The disclosed composition may be applied to the interior shaft-facing surface of a golf grip. When the grip is to be installed on a shaft, a solvent is applied to the shaft. The liquid solvated composition provides lubrication for sliding the golf grip onto the golf club shaft, and the solvent may solvate the adhesive composition. The grip/shaft are left for the composition to dry at room temperature for a period of time, and the same composition then acts as an adhesive/tackifier to secure the grip to the shaft and to prevent sliding or rotation of the grip on the shaft.

This summary is provided to introduce a selection of concepts in a simplified form that are further described below in the Detailed Description. This summary is not intended to identify key features or essential features of the subject matter of the present invention.

### BRIEF DESCRIPTION OF THE DRAWINGS

Non-limiting and non-exhaustive examples are described with reference to the following Figures.
Figure 1 depicts a side view of a grip installed onto the end of a shaft of a golf club according to an example.
Figure 2 depicts a perspective exploded view of the grip and end of the shaft of FIG. 1, according to an example.
Figure 3 depicts a cross-section view of the grip of FIG. 1, according to an example.
Figure 4 depicts a method of coating a grip with an adhesive composition, according to an example.
Figure 5 depicts a method of installing a grip including an adhesive composition to a shaft, according to an example.
Figure 6 depicts torque testing data for various grip preparations and compositions having undergone a 16-hour rest, according to an example.
Figure 7 depicts torque testing data for various grip preparations and compositions having undergone a 24-hour humidity aging, according to an example.
Figure 8 depicts torque testing data for various grip preparations and compositions including at least polyisobutylene, according to an example.
Figure 9 depicts tack testing data for various grip preparations and compositions including at least polyisobutylene, according to an example.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Examples may be practiced as methods, systems, or devices. It should be understood that this invention is not limited to the particular methodology, protocols, and reagents, etc., described herein and as such may vary. The following detailed description is therefore not to be taken in a limiting sense.

Unless defined otherwise, all technical and scientific terms used herein have the same meaning as those commonly understood to one of ordinary skill in the art to which this invention pertains.

For the purposes of this application the following terms shall have the following meanings:

As used herein, the singular forms "a," "an", and "the" include the plural reference unless the context clearly indicates otherwise.

Other than in the operating examples, or where otherwise indicated, all numbers expressing quantities of ingredients or reaction conditions used herein should be understood as modified in all instances by the term "about." The term "about" when used herein in connection with numerical values means ± 20% and with percentages means ±4%.

As used herein, the term "comprising" refers to a composition, compound, formulation, or method that is inclusive and does not exclude additional elements or method steps.

As used herein, the term "consisting of" refers to a compound, composition, formulation, or method that excludes the presence of any additional component or method steps.

As used herein, the term "consisting essentially of" refers to a composition, compound, formulation or method that is inclusive of additional elements or method steps that do not materially affect the characteristic(s) of the composition, compound, formulation or method.

Disclosed herein is the use of a solvated adhesive/tackifier composition as a stabilizing medium, for example, for installation and securing of a golf club grip or other similar object (for example, a hockey stick, lacrosse stick, fishing rod, hand tool, or other appropriate shaft with an attached grip). The disclosed composition may be applied to the interior shaft-facing surface of the grip. This application may be done during or after the grip manufacturing process. The composition may be allowed to dry on the grip, and the grip may be then provided to a user. In some examples, the grip including the composition is provided to a user as a kit that also comprises an appropriate solvent.

When the grip is to be installed on a shaft, a solvent is applied to the shaft. The liquid solvated composition provides lubrication for sliding the golf grip onto the golf club shaft, and the solvent may solvate the adhesive composition. The grip/shaft are left for the solvated composition to dry (in some examples, at room temperature) for a period of time, and the same composition, once dried, then acts as an adhesive/tackifier to secure the grip to the shaft and to prevent longitudinal sliding and/or rotation of the grip on the shaft.

In some examples, the disclosed compositions may be applied to a grip, and the grip with the dried adhesive composition film may be provided to a consumer and/or utilized. In some examples, the grip with the dried adhesive composition film may be provided to a consumer along with an adequate amount of a lubricating solvent as a kit. For example, a package may include a grip with a dried adhesive composition film on its interior surface.

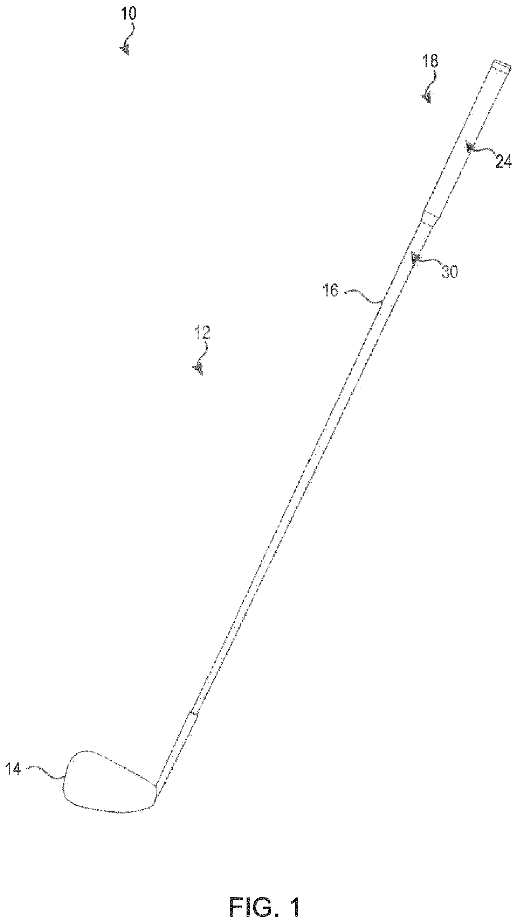

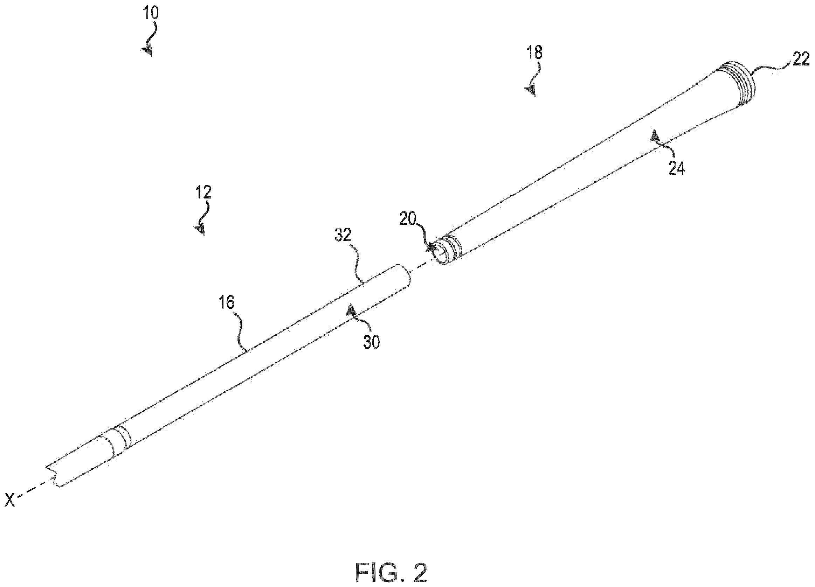

FIG. 1 depicts a side view of an assembly 10 including a grip 18 installed onto the end of a shaft 16 of a golf club 12. Golf club 12 includes a head 14 at a first end of shaft 16. The second end (distal end 32, see FIG. 2) of the shaft 16 receives grip 18 onto an outer surface 30 of the shaft 16.

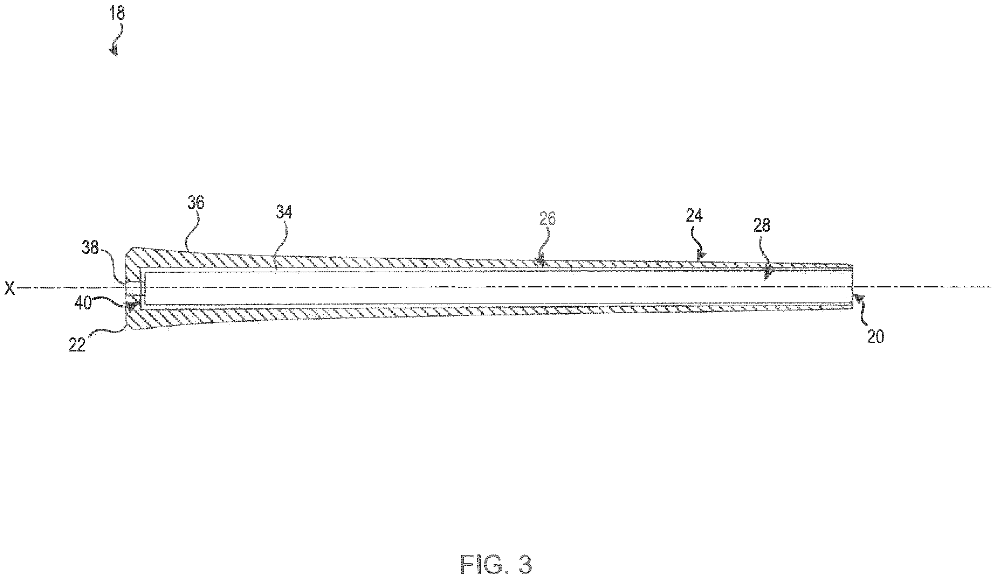

FIG. 2 depicts a perspective exploded view of the grip 18 and distal end 32 of the shaft 16. In some examples, shaft 16 is circular in cross-section and cylindrical in shape, its length extending along an axis X. In some examples, other shapes and cross-sections may be contemplated. Grip 18 is configured so as to fit onto (for example, slide onto) the outer surface 30 of the distal end 32 of the shaft 16, so that the distal end 32 of the shaft 16 is inserted into the open end 20 of the grip 18. The open end 20 and inner surface 26 (See FIG. 3) of the grip may also be circular in cross section, and concentric with outer surface 30 along axis X. In some examples, other shapes and cross-sections may be contemplated. Grip 18 has a closed end 22 opposite open end 20. In some examples, an interior surface 40 (see FIG. 3) of closed end 22 contacts an extreme end of distal end 32 when the grip 18 is fully installed/mounted onto the shaft 16.

FIG. 3 depicts a cross-section view of the grip 18. In some examples, closed end 22 includes a hole, perforation, or other opening that allows air to pass through it (and through the interior surface of closed end 22) when the grip 18 is being slid onto the shaft 16.

The inner surface 26 may be the same shape as the distal end 32 of shaft 16. The inner grip 18 defines an interior volume 28 that is define on its sides by inner surface 26, at a first end by the interior surface 40 of closed end 22, and at a second end by open end 20. The interior volume 28 receives the distal end 32 of shaft 16 when the grip 18 is installed/mounted onto the shaft 16. The grip 18 has an outer surface 24 (which may be gripped by a user during use of the assembly 10). Outer surface 24 may be configured so that the thickness of the material of the grip 18 is uniform throughout the grip 18. In other examples, outer surface 24 may be configured so that the thickness of the material of the grip 18 is non-uniform throughout the grip 18 (for example, as shown in FIG. 3, so that the thickness is greater toward the closed end 22 and lesser toward the open end 20.

In some examples, the grip 18 may comprise materials such as rubber, vulcanized rubber (for example, an elastomeric vulcanizate or others), natural or synthetic polymers (for example, polyurethane, ethylene-vinyl acetate, or others), leather, leather-based compositions, other suitable materials, or combinations thereof. Other materials or combinations of materials may be contemplated in some examples. In some examples, the grip 18 is flexible.

A film or coating 34 of an adhesive composition may be applied to the inner surface 26 of grip 18. In some examples, the adhesive composition may be noticeably tacky or sticky to the touch. The adhesive composition may be, in some examples, activated by contact with a solvent. The lubricating solvent may be applied to the coating 34 on the inner surface 26 and/or to the distal end 32 of the shaft 16.

The adhesive composition may be applied, in some examples, by spraying, rubbing, pouring, brushing, or other appropriate automated or manual application methods. In some examples where the adhesive composition is applied manually, the adhesive composition may be applied to the inside of the grips by dropping about two (2) milliliters (mL) of the adhesive composition into the interior volume of the grip, covering the grip open end, and shaking the grip until the inner surface of the grip was coated with the adhesive composition.

In some examples, the amount of adhesive composition applied to the inner surface 26 is about 2 mL. In some examples, the amount of adhesive composition applied to the inner surface 26 is between 1 mL and 3 mL. In some examples, the amount of adhesive composition applied to the inner surface 26 is between 0.5 mL and 5 mL. In some examples, the amount of adhesive composition applied to the inner surface 26 is between 1 mL and 2 mL. In some examples, the amount of adhesive composition applied to the inner surface 26 is between 2 mL and 3 mL. In some examples, the amount of adhesive composition applied to the inner surface 26 is at least 2 mL.

In some examples, the adhesive composition is dried for 24 hours. In some examples, the adhesive composition is dried for 48 hours. In some examples, the adhesive composition is dried for 36 hours. In some examples, the adhesive composition is dried for 72 hours. In some examples, the adhesive composition is dried for at least 24 hours. In some examples, the adhesive composition is dried for between 24 and 48 hours. In some examples, the adhesive composition is dried for between 12 and 24 hours. In some examples, the adhesive composition is dried for between 24 and 72 hours. In some examples, the adhesive composition is dried at room temperature and ambient humidity conditions.

In some examples, the dried film 34 of adhesive composition may have a dried film thickness of about between 1 micron to 40 microns. In some examples, the dried film 34 of adhesive composition may have a dried film thickness of about between 1 micron to 20 microns. In some examples, the dried film 34 of adhesive composition may have a dried film thickness of about between 20 microns to 40 microns. In some examples, the dried film 34 of adhesive composition may have a dried film thickness of about between 10 microns to 30 microns. In some examples, the dried film 34 of adhesive composition may have a dried film thickness of about between 1 micron to 60 microns. In some examples, the dried film 34 of adhesive composition may have a dried film thickness of about between 20 microns to 60 microns. In some examples, the dried film 34 of adhesive composition may have a dried film thickness of greater than 20 microns. In some examples, the dried film 34 of adhesive composition may have a dried film thickness of greater than 5 microns. In some examples, the dried film 34 of adhesive composition may have a dried film thickness of greater than 40 microns. In some examples, the dried film 34 of adhesive composition may have a dried film thickness of less than 40 microns. In some examples, the dried film 34 of adhesive composition may have a dried film thickness of less than 20 microns.

In some examples, a lubricating solvent is applied to the dried adhesive composition film 34 and/or to the distal end 32 of the shaft 16 by spraying, wiping, pouring, brushing, or other appropriate manual or automated methods. In some examples where the solvent is applied manually, it may be applied by a bottle with a nozzle, in an amount between two (2) and twenty (20) mL. In some examples, the amount of solvent applied may be less than 20 mL. In some examples, the amount of solvent applied may be greater than 2 mL. In some examples, the amount of solvent applied may be greater than 20 mL. In some examples, the amount of solvent applied may be between 2 mL and 20 mL. In some examples, the amount of solvent applied may be between 2 mL and 10 mL. In some examples, the amount of solvent applied may be between 10 mL and 20 mL. In some examples, the amount of solvent applied may be between 5 mL and 15 mL. In some examples, the amount of solvent applied may be about 10 mL.

In some examples, the lubricating solvent provides lubrication for sliding the inner surface 26 of grip 18 onto the distal end 32 of the shaft 16. In some examples, the lubricating solvent at least partially solvates the adhesive composition upon contact, and it is this solvated adhesive composition that provides lubrication for sliding the inner surface 26 of grip 18 onto the distal end 32 of the shaft 16. In some examples, both the lubricating solvent and the solvated adhesive composition may provide lubrication for sliding the inner surface 26 of grip 18 onto the distal end 32 of the shaft 16.

Once a grip 18 is installed onto a shaft 16, it may be dried to allow the grip 18 to adequately adhere to the shaft 16. In some examples, the installed grip is dried for 16 hours. In some examples, the installed grip is dried for 24 hours. In some examples, the installed grip is dried for 48 hours. In some examples, the installed grip is dried for 36 hours. In some examples, the installed grip is dried for 72 hours. In some examples, the installed grip is dried for at least 12 hours. In some examples, the installed grip is dried for at least 16 hours. In some examples, the installed grip is dried for at least 24 hours. In some examples, the installed grip is dried for between 16 and 24 hours. In some examples, the installed grip is dried for between 24 and 48 hours. In some examples, the installed grip is dried for between 12 and 24 hours. In some examples, the installed grip is dried for between 24 and 72 hours. In some examples, the installed grip is dried at room temperature and ambient humidity conditions. In some examples, the installed grip is dried by humidity aging, for example, at 95% relative humidity and 32 degrees Celsius.

In some examples, the adhesive composition is prepared by dissolution of one or more tackifier ingredients in one or more solvents. In some examples, a solvent comprises mineral spirits. In other examples, another suitable solvent may be used. In some examples, suitable solvents may include toluene, benzene, xylene, petroleum naphtha, isopentane, nonane, petroleum distillate, mineral spirits, another suitable solvent, or combinations thereof. In some examples, the utilized solvent is non-aqueous. In some examples, the tackifier ingredient is non-soluble in water. In some examples, the tackifier ingredient is not readily soluble in water. In other examples, the solvent is water or an aqueous solvent. In such examples, the tackifier ingredient may be soluble in water.

In some examples, the tackifier ingredient is a liquid. In other examples, the tackifier ingredient is a solid. In some examples, the tackifier ingredient may include a resin (for example, hydrocarbon resins (such as aliphatic resins), terpene resins, rosin resins, etc.), an epoxy, an acrylic adhesive, a silicone-based adhesive, a plastic adhesive, a rubber-based adhesive, a urethane-based adhesive, or other adhesive/tackifier types or combinations thereof. In some examples, the tackifier ingredient may include a hydrocarbon resin such as an aliphatic resin (for example, a C5 resin), an aromatic resin, a monomer, or a combination thereof. In some examples, suitable aliphatic (C5) resins may include cis/trans 1,3-pentadienes, 2-methyl-2-butene, cyclopentene, cyclopentadiene, and dicyclopentadiene, or other suitable resins or combinations thereof. In some examples, suitable aromatic (C9) resins may include those with base monomers of indene, methyindenes, dicyclopentadiene, styrene, alpha-methylstyrene, vinyl toluenes, other suitable monomers, and combinations thereof. In some examples, a suitable polyisobutylene (which may be referred to as a polyisobutene or PIB) may be prepared via a polymerization reaction of isobutene and may have a chemical formula of (C₄H₈)n. In some examples, a suitable alkylphenol resin may be prepared via a condensation reaction of an aldehyde and alkyl phenols. In some examples, the tackifier ingredient may include a C5 resin, a polyisobutylene, an alkylphenol (alkyl phenolic) resin, or combinations thereof.

In some examples, the total amount of tackifier ingredient (whether comprising one or multiple tackifier ingredients) may be present in the wet adhesive composition in an amount of about 10 parts by weight (for example, grams (g)) to about 100 parts by weight of the solvent (for example, mineral spirits). In some examples, the total amount of tackifier ingredient may be present in the wet adhesive composition in an amount of about 12.5 parts by weight to about 100 parts by weight of the solvent. In some examples, the total amount of tackifier ingredient may be present in the wet adhesive composition in an amount of about 15 parts by weight to about 100 parts by weight of the solvent. In some examples, the total amount of tackifier ingredient may be present in the wet adhesive composition in an amount of about 20 parts by weight to about 100 parts by weight of the solvent. In some examples, the total amount of tackifier ingredient may be present in the wet adhesive composition in an amount between about 2.5 parts by weight and about 5 parts by weight to about 100 parts by weight of the solvent. In some examples, the total amount of tackifier ingredient may be present in the wet adhesive composition in an amount between about 2.5 parts by weight and about 10 parts by weight to about 100 parts by weight of the solvent. In some examples, the total amount of tackifier ingredient may be present in the wet adhesive composition in an amount between about 5 parts by weight and about 10 parts by weight to about 100 parts by weight of the solvent. In some examples, the total amount of tackifier ingredient may be present in the wet adhesive composition in an amount between about 5 parts by weight and about 15 parts by weight to about 100 parts by weight of the solvent. In some examples, the total amount of tackifier ingredient may be present in the wet adhesive composition in an amount between about 10 parts by weight and about 15 parts by weight to about 100 parts by weight of the solvent. In some examples, the total amount of tackifier ingredient may be present in the wet adhesive composition in an amount between about 10 parts by weight and about 20 parts by weight to about 100 parts by weight of the solvent. In some examples, the total amount of tackifier ingredient may be present in the wet adhesive composition in an amount between about 2.5 parts by weight and about 20 parts by weight to about 100 parts by weight of the solvent. In some examples, the total amount of tackifier ingredient may be present in the wet adhesive composition in an amount less than 2.5 parts by weight to about 100 parts by weight of the solvent. In some examples, the total amount of tackifier ingredient may be present in the wet adhesive composition in an amount greater than 10 parts by weight to about 100 parts by weight of the solvent. In some examples, the total amount of tackifier ingredient may be present in the wet adhesive composition in an amount greater than 20 parts by weight to about 100 parts by weight of the solvent.

In some examples, where two tackifier ingredients are present in the adhesive composition, they may be present in a ratio of 2.5:10, 5:10 (1:2), or 10:10 (1:1).

In some examples, suitable lubricating solvents (for example, the solvent applied to the dried film on the grip or the distal end of the golf shaft prior to installation of the grip on the shaft) may comprise a non-aqueous solvent. In other examples, the lubricating solvent may be an aqueous solvent. In some examples, the solvent may comprise mineral spirits, water, acetone, naphtha, toluene, benzene, xylene, isopentane, nonane, petroleum distillate, isopropyl alcohol, another suitable solvent, or combinations thereof.

Testing of adhesive compositions and/or lubricating solvent combinations may include torque testing and tack testing (both additionally described below with reference to the included Examples). Torque testing determines the amount of twist (i.e. rotational slip around the external surface of the shaft) that a grip will have on a shaft when a force is applied. In preferred examples, minimal slip is desired. Torque testing results are measured in an angle of degrees of deflection. In some examples, a satisfactory angle is less than about 4.5 degrees. In some examples, a satisfactory angle is less than about 3 degrees. In some examples, a satisfactory angle is about 1.5 degrees. In some examples, a satisfactory angle is between 1 and 5 degrees. Tack testing determines the tackiness (or "stickiness") of a surface and may be measured in units of force (for example, grams of force (gF)). In preferred examples, a higher tack test result is desired. In some examples, a satisfactory tack test result is greater than about 1,000 gF. In some examples, a satisfactory tack test result is greater than about 2,000 gF. In some examples, a satisfactory tack test result is greater than about 1,500 gF. In some examples, a satisfactory tack test result is greater than about 2,500 gF. In some examples, a satisfactory tack test result is greater than about 1000 gF. In some examples, a satisfactory tack test result is about 2,700 gF. In some examples, a satisfactory tack test result is between about 1,000 gF and about 4,000 gF. In some examples, a satisfactory tack test result is between about 2,000 gF and about 3,000 gF. In preferred examples, the dried adhesive composition may be noticeably tacky or sticky to the touch. In preferred examples, the dried adhesive composition forms a smooth film and is not cakey, is flexible, and does not crack or flake when the grip material is flexed.

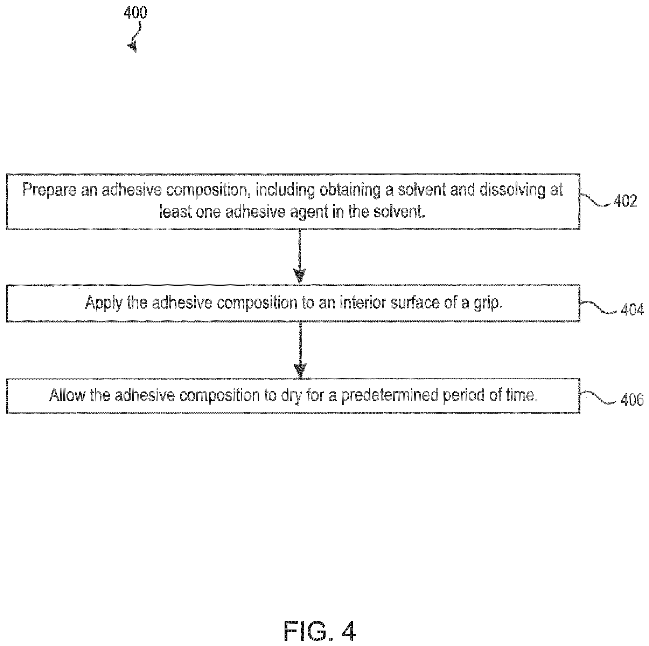

Figure 4 depicts an example method 400 of coating a grip with an adhesive composition. At operation 402, the adhesive composition may be prepared, including obtaining a solvent (for example, mineral spirits or another suitable solvent) and dissolving at least one adhesive agent (for example, alkylphenol resin, C5 resin, and/or polyisobutylene) in the solvent. The adhesive agent may be a liquid or a solid in various examples. At operation 404, the adhesive composition is applied to an interior surface of the grip (for example, by spraying, dropping, shaking, brushing, or another appropriate method as described herein). At operation 406, the adhesive composition is allowed to dry for a predetermined period of time.

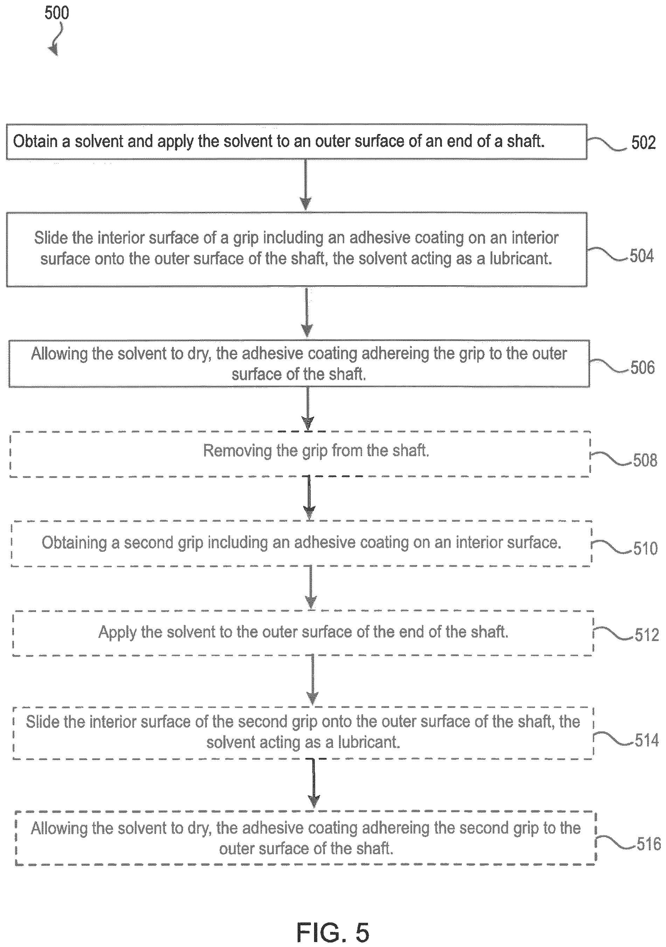

Figure 5 depicts an example method 500 of installing a grip including an adhesive composition to a shaft. At operation 502, a (lubricating) solvent (for example, mineral spirits, water, naphtha, or acetone) is obtained and is applied to an outer surface of an end of the shaft. The end of the shaft may be opposite a second end of the shaft that includes a head, paddle, or other feature. The solvent may be applied by rubbing, brushing, dipping, spraying, or other appropriate means described herein. At operation 504, the interior surface of the grip is slid onto the outer surface of the shaft, wherein the solvent and/or the solvated adhesive composition acts as a lubricant on the shaft. At operation 506, the solvent is allowed to dry, and the adhesive composition adheres the grip to the outer surface of the shaft.

In some examples, after use of the grip, it may be desired to remove the grip and replace it with another grip. At operation 508, the grip may be removed from the shaft. For example, the grip may be pulled, twisted, peeled, cut, or otherwise removed from the shaft. In some examples, after the grip is removed, some residue of the adhesive composition remains on the shaft. In other examples, after the grip is removed, no residue of the adhesive composition remains on the shaft. At operation 510, a second grip is obtained that includes adhesive composition on an interior surface of the second grip. At operation 512, a solvent is obtained and the solvent (which may be the same as the solvent used in operation 502 or may be a different solvent) is applied to the outer surface of the end of the shaft. At operation 514, the interior surface of the second grip is slid onto the outer surface of the shaft, wherein the solvent acts as a lubricant on the shaft. At operation 516, solvent is allowed to dry, and the adhesive composition adheres the second grip to the outer surface of the shaft.

In some examples, the disclosed compositions may be applied to a grip, and the grip with the dried adhesive composition film may be provided to a consumer and/or utilized. The grip may be provided alone, in some examples. The grip may be provided already installed on a golf club or other shaft, in some examples. The grip may be provided along with a golf club or other shaft, in some examples, but uninstalled (and in some examples, additionally provided with a solvent). In some examples, the grip with the dried adhesive composition film may be provided to a consumer along with an adequate amount of a lubricating solvent as a kit. In some examples, the kit may also include a golf club or other appropriate shaft. In some examples, the kit may include one or more droppers, brushes, and/or other appropriate means of applying the solvent to the desired shaft. In some examples, the solvent included in the kit may be in a bottle, bag, dropper, syringe, or other appropriate container. In some examples, the items included in the kit may be within a bag, box, vacuum-sealed packaging, cannister, wrapping, blister packaging, molded packaging, or other appropriate packaging or container.

### EXAMPLES

### EXAMPLE 1

In Example 1, three (3) different compositions were applied to golf grips, a solvent was applied, the grips were installed on a test shaft, and the resulting adhered grip was submitted to a torque test. Also tested were a golf grip with no compositions applied to the interior (installed using only solvent) and a golf grip utilizing (double-sided) tape and solvent.

The torque test operates to determine the amount of twist (i.e. rotational motion) that a grip will have on a shaft when a force is applied. The testing apparatus utilized was an Auditor OPTOMETRIX Model RS-232, available from Auditor, 781 Section 4 Fenglin Rd., Daliao District, Kaohsiung City 83166, Taiwan. A golf grip was obtained and prepared for the test. The particular grips used in this example were Tour Velvet 60R grips by EATON Golf Pride^{®}, available from Units 1 & 2, The Stirling Centre, Northfields Rd, Market Deeping, Peterborough PE6 8EQ, United Kingdom. Grips were prepared according to Table 1 below. Adhesive compositions in this Example and other Examples described herein are prepared by adding the listed number of parts by weight (in grams (g)) to 100 parts of a liquid solvent. For example, the adhesive composition of Grip C was prepared by dissolving 10 g of C5 Resin in 100 g of mineral spirits.

**Table 1: Torque Tested Grip Preparations: 16-hour RT rest**

| | **Grip A** | **Grip B** | **Grip C** | **Grip D** | **Grip E** |
|---|---|---|---|---|---|
| **Solvent** | Mineral Spirits | Mineral Spirits | Mineral Spirits | Mineral Spirits | Mineral Spirits |
| **Tape** | No | Yes | No | No | No |
| **Adhesive Composition** | No | No | 10 parts C5 Resin | 10 parts Polyisobutylene | 10 parts Alkylphenol Resin |

Grip A was prepared by applying a solvent (mineral spirits) to the shaft, with no tape applied to the shaft and no adhesive composition applied to the inside surface of the grip. Grip B was prepared by applying a solvent (mineral spirits) to the shaft, with tape applied to the shaft and no adhesive composition applied to the inside surface of the grip. Grip C was prepared by first dissolving a C5 resin in mineral spirits to generate an adhesive composition, applying the adhesive composition to the interior surface of the grip, allowing the adhesive composition to dry, and then applying a solvent (mineral spirits) to the shaft, with no tape applied to the shaft. The C5 resin utilized was Wingtack 95, available from Zeon Chemicals (Thailand) Co., LTD., 3 Soi G-14, Pakorn-Songkhrorad Road, Thambol Huaypong, Amphur Muangrayong, Rayong, 21150 Thailand. Grip D was prepared in the same method as Grip C, except that the adhesive composition was prepared by dissolving polyisobutylene in mineral spirits. The polyisobutylene utilized was HV-1900, available from ENEOS Corporation, 3-1, Yako 2-chrome, Kawasaki-ku, Kawasaki-City 210-8545 Japan. Grip E was prepared in the same method as Grip C and Grip D, except that the adhesive composition was prepared by dissolving alkylphenol resin in mineral spirits. The alkylphenol resin utilized was SP1068, available from SI Group, 1790 Hughes Landing Blvd., The Woodlands, TX 77380.

The solvent (for these and other prepared grips tested in the Examples listed herein) was applied to the area of the end of the shaft onto which the grip is to be installed by a bottle with a nozzle, in an amount between two (2) and twenty (20) mL. The adhesive composition (for these and other prepared grips tested in the Examples listed herein) was applied to the inside of the grips by dropping about two (2) mL of the adhesive composition into the interior volume of the grip, covering the grip open end, and shaking the grip until the inner surface of the grip was coated with the adhesive composition.

For the testing of each prepared grip, a steel torque test mandrel was obtained that had the same diameter as that of a standard golf club shaft (0.6 inches diameter). Each of Grips A through E were installed using mineral spirits. Example mineral spirits may be obtained from SolvChem Inc., Pearland, TX 77581.

Once each grip is mounted/installed onto the test mandrel, it was allowed to dry at room temperature for sixteen (16) hours to allow any applied compositions to dry and to allow for the grip to settle onto the test mandrel. The test mandrel with the mounted grip was then place on the testing apparatus. To ensure that each tested grip was oriented in the same direction, each was installed with the manufacturer's logo facing upwards. The shaft of the mandrel was tightened into place on the testing apparatus, and then the clamp force gauge and angle meter were turned on. The force gauge clamp was then tightened to 40kg/cm². The angle measurement was then zeroed and the locking pin was pulled out and twisted so that grip was allowed to twist freely about the mandrel shaft. A 900g weight was added to the extended arm of the testing apparatus (the weight was added in a manner so as to be motionless and not swinging). The force of the weight on the arm applied a rotational torque to the mandrel shaft. An angle reading was recorded after fifteen (15) seconds of applied force. The angle reading corresponds to the amount of deflection/rotation of the grip around the shaft. A smaller angle reading indicates less slip/rotation of the grip around the shaft and is therefore desired.

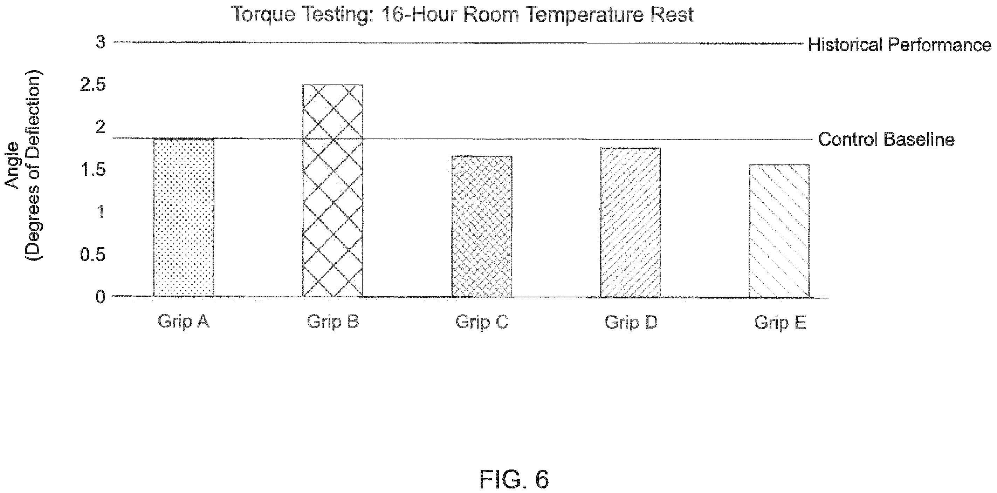

Figure 6 depicts the angle (measured in degrees of deflection) data results from the torque testing of the preparations of Table 1. The performance of Grip A represents a control baseline. Grip B performed above the baseline in this example (i.e. experienced more slip/deflection/rotation when the torque was applied), and Grips C through E performed below the baseline (i.e. experienced less slip/deflection/rotation when the torque was applied). Also shown is a historical performance of a typical golf grip installed in the traditional manner, with tape and a solvent.

Observations when working with the different adhesive compositions were that the solid C5 resin surprisingly readily dissolved in mineral spirits. The polyisobutylene (a liquid rubber) adhesive compositions were surprisingly tacky to the touch when formulated into the adhesive composition/solution and applied to the grips.

### EXAMPLE 2

In Example 2, two (2) different compositions were applied to golf grips, a solvent was applied, the grips were installed on a test shaft, the test shafts with installed grips were subject to humidity aging for 24 hours, and the resulting adhered grip was submitted to a torque test. Also tested was a golf grip with no compositions applied to the interior (installed using only solvent) that was subj ected to no humidity aging and a golf grip with no compositions applied to the interior (installed using only solvent) that was subjected to 24-hour humidity aging.

The torque testing was completed using the same apparatus and methods as outlined in Example 1. The tested grips were prepared according to Table 2 below.

**Table 2: Torque Tested Grip Preparations: 24-hour Humidity Aging**

| | **Grip F** | **Grip G** | **Grip H** | **Grip I** |
|---|---|---|---|---|
| **Solvent** | Mineral Spirits | Mineral Spirits | Mineral Spirits | Mineral Spirits |
| **Tape** | No | No | No | No |
| **Adhesive Composition** | No | No | 10 parts Polyisobutylene | 10 parts C5 Resin |
| **Humidity Aging** | No | Yes | Yes | Yes |

Grip F was prepared by applying a solvent (mineral spirits) to the shaft, with no tape applied to the shaft and no adhesive composition applied to the inside surface of the grip. Grip G was prepared by applying a solvent (mineral spirits) to the shaft, with tape applied to the shaft and no adhesive composition applied to the inside surface of the grip. Grip H was prepared by first dissolving a polyisobutylene in mineral spirits to generate an adhesive composition, applying the adhesive composition to the interior surface of the grip, allowing the adhesive composition to dry, and then applying a solvent (mineral spirits) to the shaft, with no tape applied to the shaft. Grip I was prepared in the same method as Grip H, except that the adhesive composition was prepared by dissolving C5 resin in mineral spirits. Each of Grips F through I were installed using mineral spirits.

Once Grip F was mounted/installed onto the test mandrel, it was allowed to dry at room temperature for at least four (4) hours to allow any applied compositions to dry and to allow for the grip to settle onto the test mandrel. Once Grips G though I were mounted/installed onto the test mandrels, they were subject to humidity aging at 32 degrees Celsius and at 95 percent relative humidity for 24 hours.

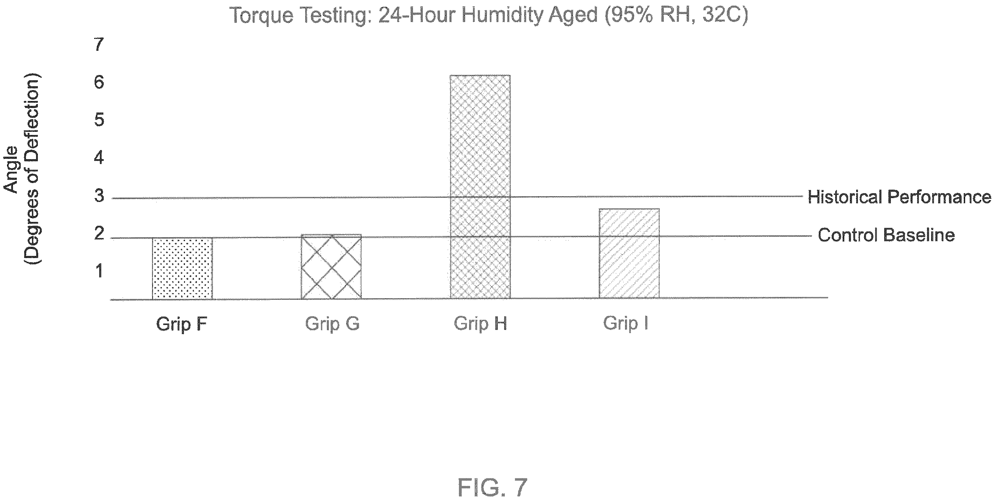

Figure 7 depicts the angle (measured in degrees of deflection) data results from the torque testing of the preparations of Table 2. The performance of Grip F represents a control baseline, and Grip G performs close to the control baseline. Also shown is a historical performance of a typical golf grip installed in the traditional manner, with tape and a solvent. Grips H and I both performed above the baseline in this example (i.e. experienced more slip/deflection/rotation when the torque was applied), although Grip I performed much closer to the baseline than Grip H.

### EXAMPLE 3

In Example 3, the adhesive composition including 10 parts C5 resin (the adhesive composition as described above with reference to Grips C and I) was further tested and was applied to four (4) grips, each of which was installed on a test shaft using a different solvent. The resulting adhered grips were submitted to a torque test. Also tested were golf grips with no compositions applied to the interior ("blown": installed via the use of compressed air) and golf grips with no compositions applied to the interior (installed using only solvent; one of these grips included the application of double-sided tape). Grips were tested that had been both dried at room temperature for 24 hours and that had been humidity aged at the conditions described in Example 2 for 24 hours.

The torque testing was completed using the same apparatus and methods as outlined in Example 1. The tested grips were prepared according to Table 3 below.

**Table 3: Torque Tested Grip Preparations: 10 parts C5 Resin with Various Solvents**

| | **Solvent** | **Tape** | **10 parts C5 Resin** | **Room Temperature Drying/ Humidity Aging** |
|---|---|---|---|---|
| **Grip J1** | Mineral Spirits | Yes | No | RT 4 hours |
| **Grip J2** | Mineral Spirits | No | No | RT 4 hours |
| **Grip K1** | None | No | Yes | RT |
| **Grip K2** | None | No | Yes | HA |
| **Grip L1** | Mineral Spirits | No | Yes | RT |
| **Grip L2** | Mineral Spirits | No | Yes | HA |
| **Grip M1** | Water | No | Yes | RT |
| **Grip M2** | Water | No | Yes | HA |
| **Grip N1** | Acetone | No | Yes | RT |
| **Grip N2** | Acetone | No | Yes | HA |
| **Grip O1** | Naphtha | No | Yes | RT |
| **Grip O2** | Naphtha | No | Yes | HA |

Grip J1 was prepared by applying a solvent (mineral spirits) to the shaft, with tape applied to the shaft and no adhesive composition applied to the inside surface of the grip. Grip J2 was prepared by applying a solvent (mineral spirits) to the shaft, with no tape applied to the shaft and no adhesive composition applied to the inside surface of the grip. Grips K1 and K2 were each prepared by first dissolving a C5 resin in mineral spirits to generate an adhesive composition, applying the adhesive composition to the interior surface of the grip, allowing the adhesive composition to dry, and then blowing the grip onto the shaft via the use of compressed air, with no tape applied to the shaft. Grips L1 and L2 were each prepared by first dissolving a C5 resin in mineral spirits to generate an adhesive composition, applying the adhesive composition to the interior surface of the grip, allowing the adhesive composition to dry, and then applying a solvent (mineral spirits) to the shaft, with no tape applied to the shaft. Grips M1 and M2 were prepared in the same method as Grips L1 and L2, except that the solvent applied was water. Grips N1 and N2 were prepared in the same method as Grips L1 and L2, except that the solvent applied was acetone. Example acetone may be obtained from Sherwin-Williams Canada Inc., 180 Brunel Road, Missisauga, Ontario, Canada. Grips O1 and O2 were prepared in the same method as Grips L1 and L2, except that the solvent utilized was naphtha. Example naphtha may be obtained from Sherwin-Williams Canada Inc., 180 Brunel Road, Missisauga, Ontario, Canada.

Once Grips J1 and J2 were mounted/installed onto the test mandrels, they were allowed to sit at room temperature for about four (4) hours. Once Grips K1, L1, M1, N1, and O1 were mounted/installed onto the test mandrels, they were allowed to dry at room temperature for 24 hours. Once Grips K2, L2, M2, N2, and O2 were mounted/installed onto the test mandrels, they were subject to 24-hour humidity aging as described above.

Table 4 below provides the angle (measured in degrees of deflection) data results from the torque testing of the preparations of Table 3. This data shows that, when compared to control baseline data without the 10 parts C5 resin and with tape, the deflection data for any of the tested solvents that were subject to room temperature drying were up to 28% less than the control, and that the deflection data for any of the tested solvents that were subject to humidity aging were up to 32% less than the control. When compared to control baseline data without the 10 parts C5 resin and without tape, the deflection data for any of the tested solvents that were subject to room temperature drying were up to 16% less than the control, and that the deflection data for any of the tested solvents that were subject to humidity aging were up to 21% less than the control. All, including the control, were less than 4.5 degrees.

**Table 4: Torque Testing: 10 parts C5 Resin with Various Solvents**

| | **Solvent** | **10 parts C5 Resin** | **Deflection Angle (degrees)** |
|---|---|---|---|
| **Grip J1** | Mineral Spirits | No | 2.25 |
| **Grip J2** | Mineral Spirits | No | 1.93 |
| **Grip K1** | None | Yes | 2.43 |
| **Grip K2** | None | Yes | 1.53 |
| **Grip L1** | Mineral Spirits | Yes | 1.71 |
| **Grip L2** | Mineral Spirits | Yes | 1.98 |
| **Grip M1** | Water | Yes | 1.62 |
| **Grip M2** | Water | Yes | 1.80 |
| **Grip N1** | Acetone | Yes | 2.07 |
| **Grip N2** | Acetone | Yes | 1.89 |
| **Grip O1** | Naphtha | Yes | 1.89 |
| **Grip O2** | Naphtha | Yes | 1.89 |

### EXAMPLE 4

In Example 4, four (4) different compositions were applied to golf grips, a solvent was applied, the grips were installed on a test shaft, the test shafts with installed grips were subject to humidity aging for 72 hours, and the resulting adhered grip was submitted to a torque test.

The torque testing was completed using the same apparatus and methods as outlined in Example 1. The tested grips were prepared according to Table 5 below.

**Table 5: Torque Tested Grip Preparations: 72-hour Humidity Aging**

| | **Grip P** | **Grip Q** | **Grip R** | **Grip S** |
|---|---|---|---|---|
| **Solvent** | Mineral Spirits | Mineral Spirits | Mineral Spirits | Mineral Spirits |
| **Tape** | No | No | No | No |
| **Adhesive Composition** | 10 parts C5 Resin; 2.5 parts Polyisobutylene | 10 parts C5 Resin; 5.0 parts Polyisobutylene | 10 parts C5 Resin; 10 parts Polyisobutylene | 10 parts Polyisobutylene |
| **Humidity Aging** | Yes | Yes | Yes | Yes |

Grips P, Q, and R were prepared by first dissolving both polyisobutylene and C5 resin in mineral spirits (according to the compositions listed above in Table 5) to generate an adhesive composition, applying the adhesive composition to the interior surface of the grip, allowing the adhesive composition to dry, and then applying a solvent (mineral spirits) to the shaft, with no tape applied to the shaft. Grip S was prepared in the same method as Grip P, except that the adhesive composition was prepared by dissolving only the listed amount of polyisobutylene in mineral spirits.

Once Grips P though S were mounted/installed onto the test mandrels, they were subject to humidity aging at 32 degrees Celsius and at 95 percent relative humidity for 72 hours.

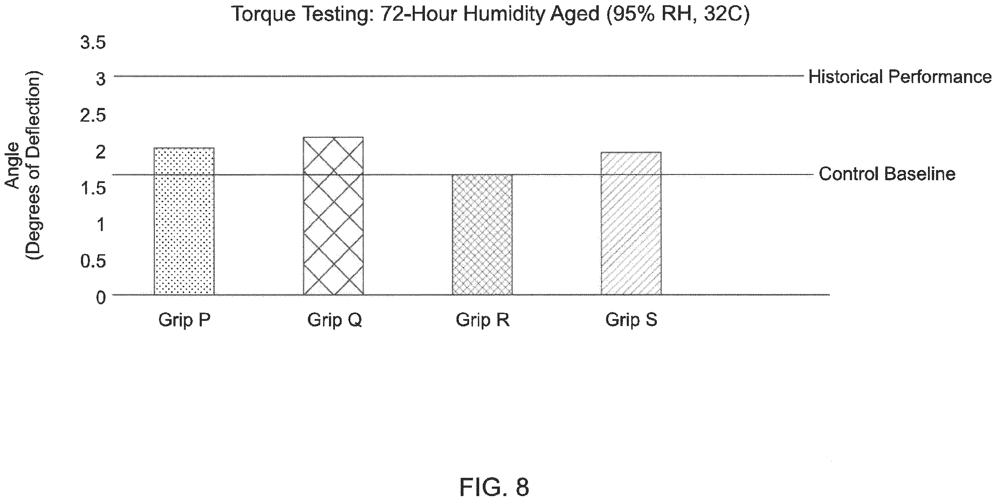

Figure 8 depicts the angle (measured in degrees of deflection) data results from the torque testing of the preparations of Table 5. Also shown is a historical performance of a typical golf grip installed in the traditional manner, with tape and a solvent. Grips P, Q, and S performed above the baseline in this example (i.e. experienced more slip/deflection/rotation when the torque was applied). Grip R performed at about the baseline.

### EXAMPLE 5

In Example 5, the four (4) compositions of the Grips of Table 5 above were applied to a sample material (in this example, the sample material was of the same compound as the Tour Velvet golf grip by EATON Golf Pride^{®}, Units 1 & 2, The Stirling Centre, Northfields Rd, Market Deeping, Peterborough PE6 8EQ, United Kingdom) and the resulting prepared sample was submitted to a tack test, to determine the tackiness or "stickiness" of the adhesive composition after it has been allowed to dry. Application of the compositions to the sample material included placing up to 1 mL of the composition to the upper flat, horizontal surface of a clean piece of sample material (in this example, the sample was 2 in. long by 2 in. wide), using a plastic pipette.

Composition P, Q, and R were prepared by first dissolving both polyisobutylene and C5 resin in mineral spirits (according to the compositions listed above in Table 5) to generate an adhesive composition, applying the adhesive composition to the flat surface of the sample material, and allowing the adhesive composition to dry for 72 hours. Composition S was prepared in the same method as Composition P, except that the adhesive composition was prepared by dissolving only the listed amount of polyisobutylene in mineral spirits.

Each prepared sample was allowed to dry at room temperature for seventy-two (72) hours. The testing apparatuses utilized were a Mark-10^{®} Force Tester, Model M5-50 and a Mark-10(4) Stand, Model ESM303; both available from Mark-10 at 11 Dixon Ave, Copiague, NY 11726. The prepared, dried samples were mounted adhesive composition-side facing upwards to a horizontal metal platform, with double-sided tape on the underside (the side opposite the adhesive) of the sample in place to mount the prepared sample to the platform. A stainless-steel fixture (with a circular, flat face 12.5 mm in diameter) connected to the Force Tester was lowered along the Stand at a speed of 5 inches per minute so that the flat face of the fixture contacted the adhesive composition on the prepared sample. The fixture was lowered until a 20 Newtons of force were applied, and the fixture was then left to dwell on the surface for ten (10) seconds. The fixture was then pulled upward at a speed of 20 inches per minute. The program for downward motion, application of force, dwell duration, and upward motion was automated into the testing apparatus and was therefore repeatable.

The Mark-10 apparatus measures a maximum applied force, a compound relaxation force after a dwell time, and a tack number. The tack number (measured in grams of force (gF)) corresponds to the force required to pull the sensor of the testing apparatus off of the adhesive surface of the prepared sample. A larger tack number indicates greater stickiness/tackiness of the adhesive composition (which may contribute to a stronger adhesion of the grip to the shaft) and is therefore desired.

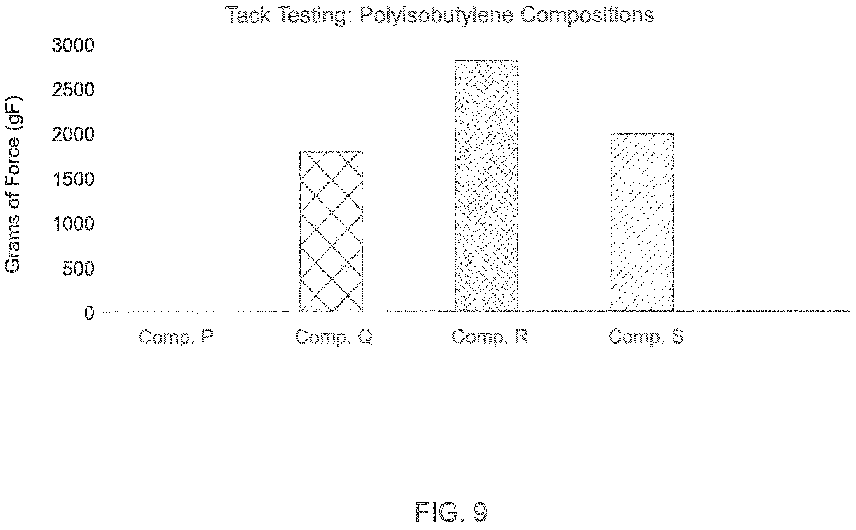

Figure 9 depicts the tack number (measured in gF) data results from the tack testing of the Compositions of Table 5. The performance of Composition P indicated negligible tack. The performance of Composition R indicated the highest amount of tack.

Although specific aspects were described herein, the scope of the technology is not limited to those specific aspects. One skilled in the art will recognize other aspects or improvements that are within the scope of the present technology. Therefore, the specific structure, acts, or operations are disclosed only as illustrative aspects. Therefore, the specific structure, acts, or operations are disclosed only as illustrative aspects. Examples of the disclosure may be described according to the following aspects.

Aspect 1: A method of coating a grip with an adhesive composition, comprising: preparing the adhesive composition, wherein preparing the adhesive composition comprises dissolving at least one adhesive agent in a solvent; applying the adhesive composition to an interior surface of the grip; and allowing the adhesive composition to dry for a predetermined period of time.

Aspect 2: The method of aspect 1, wherein the ratio of the at least one adhesive agent to the solvent is 1 to 10.

Aspect 3: The method of aspect 1, wherein the at least one adhesive agent is selected from the group consisting of: polyisobutylene, C5 resin, and alkylphenol resin.

Aspect 4: The method of aspect 3, wherein the at least one adhesive agent comprises polyisobutylene.

Aspect 5: The method of aspect 1, further comprising dissolving in the solvent a second adhesive agent.

Aspect 6: The method of aspect 5, wherein the ratio of the solvent to the second adhesive agent is 10 to 1.

Aspect 7: The method of aspect 5, wherein the second adhesive agent is selected from the group consisting of: polyisobutylene, C5 resin, and alkylphenol resin.

Aspect 8: The method of aspect 7, wherein the at least one adhesive agent comprises polyisobutylene and the second adhesive agent comprises C5 resin.

Aspect 9: The method of aspect 8, wherein the ratio of polyisobutylene to C5 is 1 to 1.

Aspect 10: The method of any of the preceding aspects, wherein the solvent comprises mineral spirits.

Aspect 11: The method of any of the preceding aspects, wherein the grip is a golf club grip.

Aspect 12: The method of aspect 1, further comprising: applying a second solvent to an outer surface of a shaft; sliding the interior surface of the grip onto the outer surface of the shaft, wherein the second solvent acts as a lubricant on the shaft; and allowing the second solvent to dry, wherein the adhesive composition adheres the grip to the outer surface of the shaft.

Aspect 13: The method of aspect 12, further comprising: removing the grip from the shaft; applying the second solvent to an outer surface of the end of the shaft; sliding an interior surface of a second grip onto the outer surface of the shaft, wherein the second grip includes the adhesive composition on the interior surface of the second grip, and wherein the second solvent acts as a lubricant on the shaft; and allowing the second solvent to dry, wherein the adhesive composition adheres the second grip to the outer surface of the shaft.

Aspect 14: The method of any of aspects 12 - 13, wherein the second solvent is selected from the group consisting of: mineral spirits, acetone, water, and naphtha.

Aspect 15: The method of any of aspects 12 - 13, wherein the second solvent comprises the same solvent as the first solvent.

Aspect 16: The method of any of aspects 12 - 13, wherein the second solvent comprises a different solvent than the first solvent.

Aspect 17: A method comprising: applying a solvent to an outer surface of a shaft; sliding the interior surface of a grip onto the outer surface of the shaft, wherein the solvent acts as a lubricant on the shaft, wherein the grip includes an adhesive composition on an interior surface of the grip; and allowing the solvent to dry, wherein the adhesive composition adheres the grip to the outer surface of the shaft.

Aspect 18: The method of aspect 17, wherein the solvent is selected from the group consisting of: mineral spirits, acetone, water, and naphtha.

Aspect 19: The method of aspect 17, wherein the adhesive composition comprises at least one adhesive agent is selected from the group consisting of: polyisobutylene, C5 resin, and alkylphenol resin.

Aspect 20: The method of aspect 17, further comprising: removing the grip from the shaft; applying the second solvent to an outer surface of the end of the shaft; sliding an interior surface of a second grip onto the outer surface of the shaft, wherein the second grip includes the adhesive composition on the interior surface of the second grip, and wherein the second solvent acts as a lubricant on the shaft; and allowing the second solvent to dry, wherein the adhesive composition adheres the second grip to the outer surface of the shaft.

Aspect 21: A kit for installing a grip to a shaft, comprising: a grip, wherein the grip defines an interior surface configured to fit on an exterior surface of an end of the shaft, wherein the grip comprises a coating of an adhesive composition on the interior surface of the grip, and wherein the adhesive composition comprises at least one adhesive agent; and a solvent, wherein when the solvent is applied to the exterior surface of the end of the shaft, the solvent provides lubrication for installation of the interior surface of the grip onto the exterior surface of the end of the shaft, and wherein when the interior surface of the grip is installed onto the exterior surface of the end of the shaft, the adhesive agent adheres the grip to the shaft.

Aspect 22: The method of aspect 21, wherein the solvent is selected from the group consisting of: mineral spirits, acetone, water, and naphtha.

Aspect 23: The method of aspect 21, wherein the adhesive composition comprises at least one adhesive agent is selected from the group consisting of: polyisobutylene, C5 resin, and alkylphenol resin.

Aspect 24: A golf club grip, comprising: a grip, the grip comprising a body, the body surrounding an interior volume; an interior surface of the body, the interior surface defining the interior volume; an adhesive film coated onto the interior surface of the body, wherein the adhesive film comprises at least one adhesive agent.

Aspect 25: The golf club grip of aspect 24, wherein the adhesive composition comprises at least one adhesive agent is selected from the group consisting of: polyisobutylene, C5 resin, and alkylphenol resin.

Aspect 26: An adhesive composition for application to an interior surface of a grip, the composition comprising: between about 0 parts and 10 parts C5 resin; between about 2.5 parts and about 10 parts polyisobutylene; and about 100 parts solvent.

Aspect 27: The composition of aspect 26, wherein the solvent comprises mineral spirits.

Aspect 28: The composition of aspect 26, further comprising: about 10 parts C5 resin; about 2.5 parts polyisobutylene; and about 100 parts solvent.

Aspect 29: The composition of aspect 26, further comprising: about 10 parts C5 resin; about 5 parts polyisobutylene; and about 100 parts solvent.

Aspect 30: The composition of aspect 26, further comprising: about 10 parts C5 resin; about 10 parts polyisobutylene; and about 100 parts solvent.

Aspect 31: The composition of aspect 26, further comprising: about 10 parts polyisobutylene; and about 100 parts solvent.

Having described the preferred aspects and implementations of the present disclosure, modifications and equivalents of the disclosed concepts may readily occur to one skilled in the art.

For the purposes of this application, directional terms such as "upper," "lower," "upward," and "downward" are intended to be descriptive with reference to the disclosure above and, where applicable, in relation to the orientation shown in the Figures for clarity. The examples as practiced may include examples where the systems and devices are in a different orientation.

While particular uses of the technology have been illustrated and discussed above, the disclosed technology can be used with a variety of environments in accordance with many examples of the technology. The above discussion is not meant to suggest that the disclosed technology is only suitable for implementation within the environments shown and described above. As should be appreciated, the various aspects described with respect to the figures herein are not intended to limit the technology to the particular aspects described. Accordingly, additional configurations can be used to practice the technology herein and/or some aspects described can be excluded without departing from the methods and systems disclosed herein.

This disclosure described some aspects of the present technology with reference to the accompanying drawings, in which only some of the possible aspects were shown. Other aspects can, however, be embodied in many different forms and should not be construed as limited to the aspects set forth herein. Rather, these aspects were provided so that this disclosure was thorough and complete and fully conveyed the scope of the possible aspects to those skilled in the art.

Similarly, where operations of a process are disclosed, those operations are described for purposes of illustrating the present technology and are not intended to limit the disclosure to a particular sequence of operations. For example, the operations can be performed in differing order, two or more operations can be performed concurrently, additional operations can be performed, and disclosed operations can be excluded without departing from the present disclosure. Further, each operation can be accomplished via one or more sub-operations. The disclosed processes can be repeated.

## Claims

1. A golf club grip, comprising:
a grip, the grip comprising a body, the body surrounding an interior volume;
an interior surface of the body, the interior surface defining the interior volume;
an adhesive film coated onto the interior surface of the body,
wherein the adhesive film comprises at least one adhesive agent.

2. The golf club grip of claim 1, wherein the at least one adhesive agent comprises at least one of: polyisobutylene, C5 resin, and alkylphenol resin.

3. The golf club grip of any of claims 1-2, wherein the interior volume is configured to be installed onto a shaft, and wherein the adhesive film is coated onto the interior surface of the body prior to installation of the grip onto the shaft.

4. The golf club grip of any of claims 1-3, wherein the adhesive film is adapted to be activated by a solvent.

5. The golf club grip of claim 4, wherein the interior volume is configured to be installed onto a shaft, and wherein the solvent provides lubrication for installation of the interior surface of the grip onto an exterior surface of the shaft.

6. The golf club grip of any of claims 4-5, wherein the solvent is selected from the group consisting of: mineral spirits, acetone, water, and naphtha.

7. A method for making the golf club grip of claim 1, comprising:
preparing the adhesive film, wherein preparing the adhesive film comprises dissolving the at least one adhesive agent in a solvent;
applying the adhesive film to an interior surface of the body; and
allowing the adhesive film to dry for a predetermined period of time prior to installation of the golf club grip onto a shaft.

8. The method of claim 7, wherein the ratio of the at least one adhesive agent to the solvent is 1 to 10.

9. The method of any of claims 7-8, further comprising dissolving in the solvent a second adhesive agent, wherein the ratio of the solvent to the second adhesive agent is 10 to 1, and wherein the second adhesive agent is selected from the group consisting of: polyisobutylene, C5 resin, and alkylphenol resin.

10. The method of claim 9, wherein a composition of the adhesive film prior to drying comprises:
between about 0 parts and 10 parts C5 resin;
between about 2.5 parts and about 10 parts polyisobutylene; and
about 100 parts solvent.

11. The method of claim 10, wherein the solvent is selected from the group consisting of: mineral spirits, acetone, water, and naphtha.

12. The method of any of claims 7-11, wherein the solvent comprises mineral spirits.

13. A method of installing the golf club grip of claim 1 onto a shaft, comprising:
applying a second solvent to an outer surface of the shaft;
sliding the interior surface of the body onto the outer surface of the shaft, wherein the second solvent acts as a lubricant on the shaft; and
allowing the second solvent to dry, wherein the adhesive film adheres the interior surface of the grip to the outer surface of the shaft.

14. The method of claim 13, wherein the second solvent is selected from the group consisting of: mineral spirits, acetone, water, and naphtha.

15. The method of any of claims 13-14, further comprising:
removing the grip from the shaft;
applying the second solvent to the outer surface of the shaft;
sliding an interior surface of a second grip onto the outer surface of the shaft,
wherein the second grip includes the adhesive film on the interior surface of the second grip, and
wherein the second solvent acts as a lubricant on the shaft; and
allowing the second solvent to dry, wherein the adhesive film adheres the interior surface of the second grip to the outer surface of the shaft.
